# EUROPEAN PATENT APPLICATION

(11) **EP 2 833 658 A1**
(43) Date of publication of application: **04.02.2015**
(21) Application number: 12872474.7
(22) Date of filing: 02.11.2012
(51) Int. Cl.: H04W 8/26, H04L 12/28, H04L 29/08, H04W 84/12

(54) **WIRELESS DEVICE, ADDRESS DETERMINATION METHOD, COMMUNICATION SYSTEM, AND WIRELESS TERMINAL**

(30) Priority: 30.03.2012 JP 2012082671
(71) Applicant: NEC CASIO Mobile Communications, Ltd., Kawasaki-shi, Kanagawa 211-8666 (JP)
(72) Inventor: FUJINO, SHOZO, Kanagawa 2118666 (JP)
(74) Representative: Vossius & Partner
(86) International application number: PCT/JP2012/007055
(87) International publication number: WO 2013/145045

(57) **Abstract**

A radio device (1) includes a radio base station function (4) and a radio terminal function (5). The radio device (1) includes: address information acquisition means for transmitting, by the radio terminal function (5), an address offer request to a different radio base station, and for acquiring and storing address information allocated to the radio device (1) in response to the request; and address information offer means for preferentially offering to a radio terminal (2), by the radio base station function (4), address information other than the address information stored in the address information acquisition means. Thus, it is possible to provide a radio device, an address determination method, a communication system and a radio terminal, which can suppress duplicate allocation of address information to the radio terminal.

## Description

### Technical Field

The present invention relates to a radio device, an address determination method, a communication system and a radio terminal, and particularly to a control technique to determine an address for the radio terminal.

### Background Art

WLAN (Wi-Fi) has been universally put into practical use as one of wireless communication technologies, specifications of which have been developed by IEEE and Wi-Fi Alliance. WLAN-based devices include a software AP (Access Point) on which both a radio base station function and a radio terminal function are mounted (e.g., see PTLs 1 and 2). Currently, specifications of the software AP technique have been studied under the name specified as "Wi-Fi P2P" or "Wi-Fi Direct". Both a Wi-Fi terminal function and an AP function can be implemented in equipment (Wi-Fi P2P Device) which mounts thereon a chip compatible with the Wi-Fi P2P standard.

The AP in the Wi-Fi technology accepts and processes an AP search, a connection (association) request and a disconnection request, which originate from a Wi-Fi terminal. If the AP includes a DHCP server function, the AP further processes an IP offer request. The association intends Association procedures defined by the specifications. The disconnection intends that a set of procedures concerning the association and the offer of an IP address be taken back to square one. Generally, in the offer of an IP address handled by the Wi-Fi technology, there is offered a local address which is valid only within a local network.

The terminal function of the Wi-Fi P2P Device is referred to as "Wi-Fi P2P Client", and the base station function is referred to as "Wi-Fi P2P Group Owner".

DHCP (Dynamic Host Configuration Protocol) is the most common technique for offering an IP address to a terminal. While the DHCP is a client-server type address offer technique and requires a DHCP server function, a lot of broadband routers include the AP and the DHCP server. In the Wi-Fi P2P standard, it has been defined that a server function for the IP offer such as the DHCP is mounted on the Wi-Fi P2P Group Owner.

### Citation List

### Patent Literature

**PTL 1:** Japanese Unexamined Patent Application Publication No. 2004-304720
**PTL 2:** Japanese Unexamined Patent Application Publication No. 2010-268145

### Summary of Invention

### Technical Problem

Conventionally, the following problems arise in the wireless communication environment where a plurality of local address systems are mixed. One of the problems is that if a radio base station relays packets between two IP networks, IP addresses collide and thus it is not possible to normally perform routing. Another one of the problems is that upon resolving the collision of addresses by use of NAT or NAPT, it is not possible to rewrite information in a payload, or to normally conduct communication if there is a multi-stage address conversion configuration. Yet another one of the problems is that if a radio terminal simultaneously associates with two radio base stations, two network addresses collide and thus it is not possible to normally transmit packets.

An exemplary object of the present invention is to provide a radio device, an address determination method, a communication system and a radio terminal, which can suppress duplicate allocation of address information to the radio terminal.

### Solution to Problem

A radio device according to the present invention includes a radio base station function and a radio terminal function. This radio device includes: address information acquisition means for transmitting, by the radio terminal function, an address offer request to a different radio base station, and for acquiring and storing address information allocated to the radio device in response to the request; and address information offer means for preferentially offering to a radio terminal, by the radio base station function, address information other than the address information stored in the address information acquisition means.

Further, an address determination method according to the present invention includes the steps of: transmitting an address offer request to a different radio base station; receiving allocated address information from the different radio base station; and preferentially offering, upon offering an address to a radio terminal, address information other than the received address information to the radio terminal.

Further, a communication system according to the present invention includes a radio device that includes a radio base station function and a radio terminal function, and a radio terminal that can communicate with the radio device. The radio terminal includes means for outputting a change request for address information upon performing multi access to a radio base station other than the radio device. The radio device includes: address information acquisition means for transmitting an address offer request to a different radio base station, the address offer request being triggered when a change request for address information is received from a radio terminal to which the radio base station function is connected, and for acquiring and storing address information allocated to the radio device in response to the address offer request; and address information offer means for preferentially offering to a radio terminal, by the radio base station function, address information other than the address information stored in the address information acquisition means.

Furthermore, a radio terminal according to the present invention outputs, to a first radio base station, a change request for address information offered by the first radio base station, when the radio terminal performs multi access to a second radio base station that differs from the first radio base station, while communicating with the first radio base station.

### Advantageous Effects of Invention

According to the present invention, it is possible to provide a radio device, an address determination method, a communication system and a radio terminal, which can suppress duplicate allocation of address information to the radio terminal.

### Brief Description of Drawings

Fig. 1 is a block diagram showing a configuration of a communication system according to a first exemplary embodiment;
Fig. 2A is a sequence diagram showing a flow of processes in the communication system according to the first exemplary embodiment;
Fig. 2B is a sequence diagram showing a flow of processes in the communication system according to the first exemplary embodiment;
Fig. 3 is a block diagram showing a configuration of a communication system according to a second exemplary embodiment;
Fig. 4A is a sequence diagram showing a flow of processes in the communication system according to the second exemplary embodiment;
Fig. 4B is a sequence diagram showing a flow of processes in the communication system according to the second exemplary embodiment;
Fig. 5 is a block diagram showing a configuration of a communication system according to a third exemplary embodiment;
Fig. 6A is a sequence diagram showing a flow of processes in the communication system according to the third exemplary embodiment;
Fig. 6B is a sequence diagram showing a flow of processes in the communication system according to the third exemplary embodiment;
Fig. 7 is a block diagram showing a configuration of a communication system according to a fourth exemplary embodiment;
Fig. 8A is a sequence diagram showing a flow of processes in the communication system according to the fourth exemplary embodiment; and
Fig. 8B is a sequence diagram showing a flow of processes in the communication system according to the fourth exemplary embodiment.

### Description of Embodiments

### First Exemplary Embodiment

Hereinafter, exemplary embodiments of the present invention will be described with reference to the accompany drawings. In the following drawings, primary elements in the exemplary embodiments of the present invention are illustrated by solid lines.

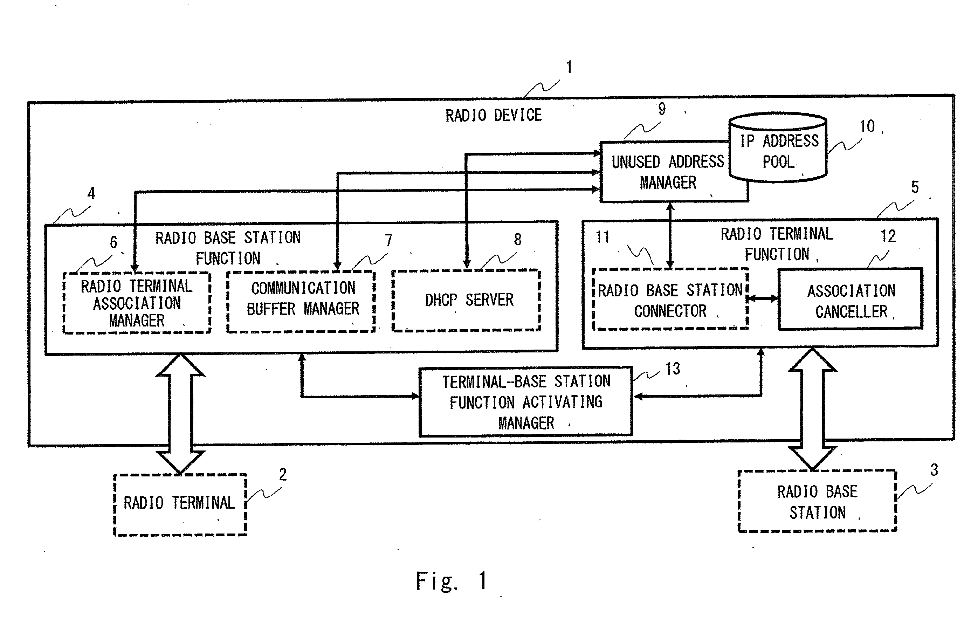

Fig. 1 shows a configuration of a communication system according to a first exemplary embodiment. A radio device 1 includes a radio base station function 4, a radio terminal function 5, an unused address manager 9, and a terminal-base station function activating manager 13.

The radio base station function 4 is processing means which serves as a radio base station over the communication system. Accordingly, the radio device 1 can conduct wireless communication with one or more radio terminals 2 by using this radio base station function 4. The radio base station function 4 includes a radio terminal association manager 6, a communication buffer manager 7, and a DHCP server 8.

The radio terminal function 5 is processing means which serves as a radio terminal over the communication system. Accordingly, the radio device 1 can communicates with one or more radio base stations 3 by using this radio terminal function 5. The radio terminal function 5 includes a radio base station connector 11 and an association canceller 12.

The radio terminal association manager 6 manages association states of radio terminals 2 under control thereof.

The communication buffer manager 7 manages empty states of communication buffers for communication with radio terminals 2 under control thereof.

The DHCP server 8 offers IP addresses to radio terminals 2 under control thereof.

The unused address manager 9 includes an IP address pool 10. The unused address manager 9 executes a process to manage IP addresses determined to be unused in the communication system. The IP address pool 10 stores information on IP addresses which are used or likely to be used. The unused address manager 9 holds a database which indicates the captured state of the recognized IP address pool 10. Note that in the following description, the IP address pool 10 will be sometimes denoted as "data base 10" or "captured database 10".

The radio base station connector 11 performs/makes a base station search, an association request and an IP offer request for/to a different radio base station 3.

The association canceller 12 cancels connection to a different radio base station 3 which is established for recognizing the IP address pool 10, every time the connection is established.

The terminal-base station function activating manager 13 activates and deactivates the radio base station function and the radio terminal function so that they separately operate.

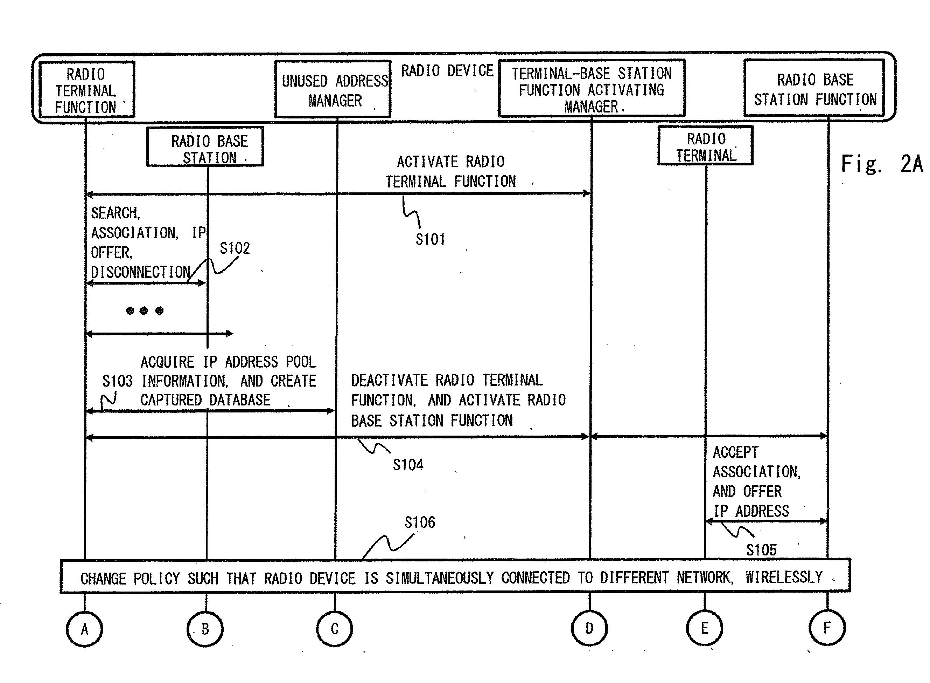

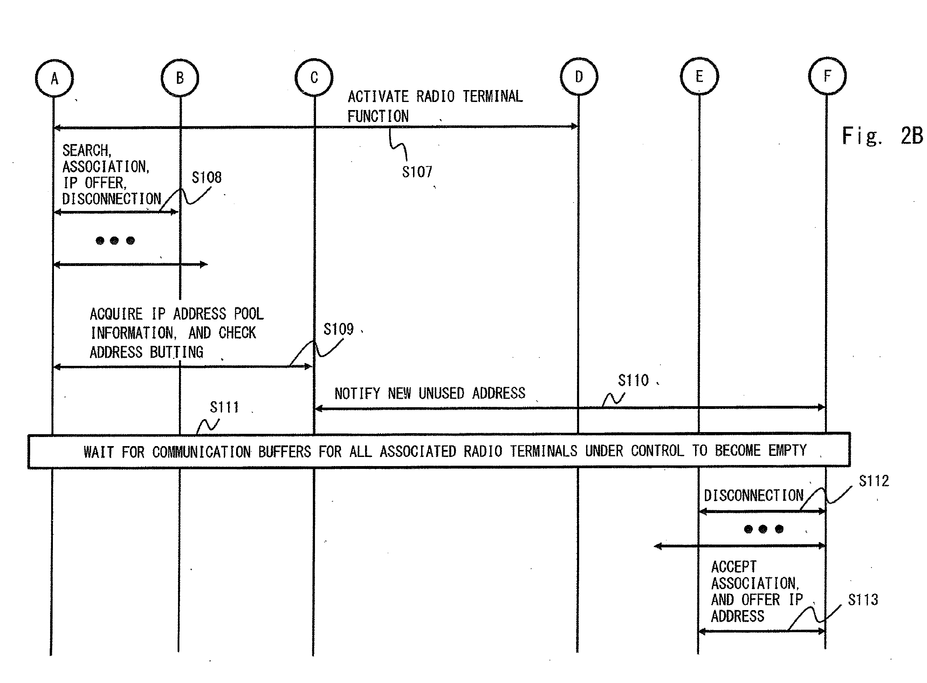

Next, a flow of processes in the communication system according to this exemplary embodiment will be described with reference to Figs. 1, 2A and 2B. Figs. 2A and 2B are sequence diagrams showing the flow of processes in the communication system.

Assume that a user powers up the radio device 1 in order to use it as a radio base station. When the radio device 1 is booted, the terminal-base station function activating manager 13 firstly activates the radio terminal function 5 (step S101), thereby performing/making a base station search, an association request and an IP offer request for/to a different radio base station 3 which is provided in the vicinity of the radio device 1. The offer of IP address is performed for recognizing an IP address pool in a neighboring network, and therefore the offer is immediately disconnected. This process is also similarly repeated with respect to other radio base stations (step S102). As a result, the unused address manager 9 creates and holds the database 10 indicating the captured state of the IP address pool (step S103).

At this time, the terminal-base station function activating manager 13 deactivates the radio terminal function 5, and activates the radio base station function 4 (step S104). The radio base station function 4 accepts an association request originating from a different radio terminal 2, and offers an unused IP address to the radio terminal 2 (step S105).

Assume that a policy is hastily changed such that the radio device 1 is simultaneously connected to a different network, wirelessly (step S106). The terminal-base station function activating manager 13 activates the radio terminal function 5 separate from the active radio base station function 4 (step S107), thereby performing a search for a neighboring radio base station 3, associating with the neighboring radio base station 3, receiving an offered IP address, and then canceling the association. This process is similarly repeated with respect to other radio base stations (step S108). According to this process, the radio device 1 recognizes the IP address offered by a different radio base station 3. The state of this IP address once becomes an unused state, since the association is canceled after the offer thereof. Meanwhile, the state of this IP address is determined to be likely to become a used state, since the radio base station 3 may offer this IP address again at a later time. Accordingly, in this exemplary embodiment, the IP address recognized in such a manner is recognized as address information which is likely to be used, and stored in the captured database 10 for the IP address pool to update the database 10.

The unused address manager 9 acquires the address information which is likely to be used from the updated captured database 10, and checks whether or not the IP address pool which the radio base station function 4 has already offered to radio terminals 2 under control thereof is stored in the captured database 10 as IP addresses which are likely to be used (step S109).

There is no problem if the IP addresses which the radio base station function 4 has offered to radio terminals 2 under control thereof do not coincide with the IP addresses stored in the captured database 10 as the ones which are likely to be used. Therefore, the operation procedure is terminated at this timing.

Meanwhile, if the IP addresses which the radio base station function 4 has offered to radio terminals 2 under control thereof coincide with the IP addresses stored in the captured database 10 as the ones which are likely to be used, the unused address manager 9 notifies the radio base station function 4 about new unused IP addresses (step S110), and the radio base station function 4 checks communication buffers for communication with all associated radio terminals under control thereof and waits for the communication buffers to become empty (step S111).

After the communication buffers become empty, the radio base station function 4 cancels the association with all radio terminals and the offer of IP addresses (step S112), and changes its configuration so as to subsequently perform DHCP offer using the unused IP addresses received at step S110. After that, all radio terminals, whose association has been canceled, are re-connected to the radio base station function 4 (step S113).

As described above, the radio device according to the first exemplary embodiment activates the radio terminal function 5 to receive the offer of IP addresses from other radio base stations 3, thereby acquiring the IP address information which is likely to be used, and preferentially offering, by the radio base station function 4, the IP address other than the acquired IP address to the radio terminal 2. Therefore, it is possible to suppress that the IP address offered by the radio device is a duplication of the IP address offered by the different radio base station 3. Particularly in the case where the radio base station relays packets between two IP networks, it is possible to solve the problem that IP addresses collide and thus routing cannot be normally performed. At this time, there are not caused secondary problems that information in a payload cannot be rewritten upon resolving the collision of addresses by use of NAT or NAPT, and that communication cannot be normally conducted if there is multi-stage address conversion configuration.

### Second Exemplary Embodiment

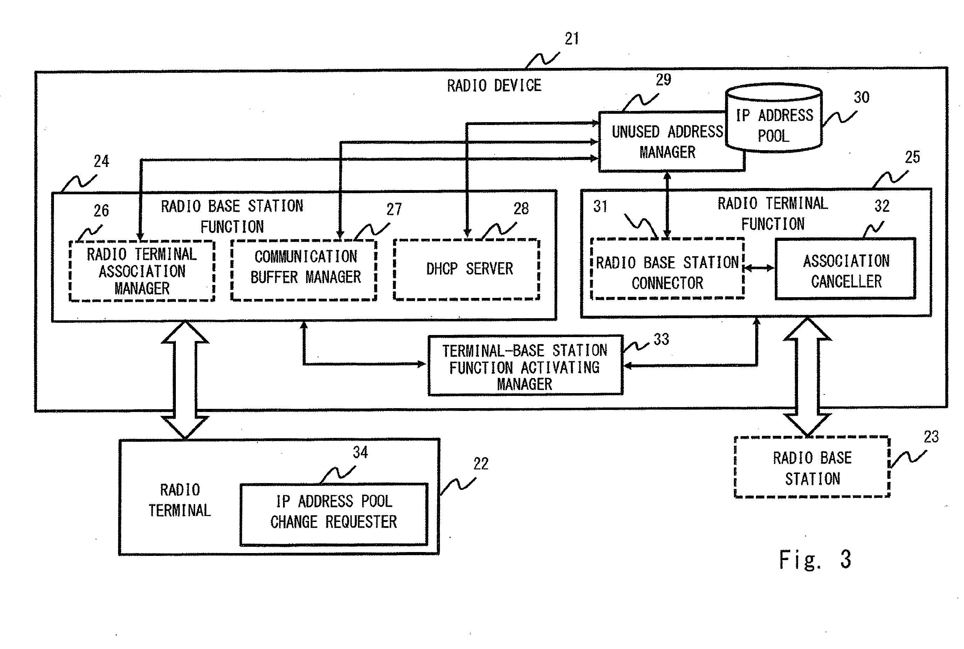

Fig. 3 shows a configuration of a communication system according to a second exemplary embodiment of the present invention. A radio device 21 includes a radio base station function 24, a radio terminal function 25, an unused address manager 29, and a terminal-base station function activating manager 33. Moreover, the radio base station function 24 includes a radio terminal association manager 26, a communication buffer manager 27, and a DHCP server 28. The radio terminal function 25 includes a radio base station connector 31 and an association canceller 32. The unused address manager 29 includes an IP address pool 30. The radio device 21 is connected to one or more radio terminals 22 and one or more radio base stations 23 by using a specific radio technology, and the radio terminal 22 includes therein an IP address pool change requester 34.

The radio terminal association manager 26 manages association states of radio terminals 22 under control thereof.

The communication buffer manager 27 manages empty states of communication buffers for communication with radio terminals 22 under control thereof.

The DHCP server 28 offers IP addresses to radio terminals 22 under control thereof.

The unused address manager 29 holds a database which indicates the captured state of the recognized IP address pool 30. Note that in the following description, the IP address pool 30 will be sometimes denoted as "data base 30" or "captured database 30".

The radio base station connector 31 performs/makes a base station search, an association request and an IP offer request for/to a different radio base station 23.

The association canceller 32 cancels connection to a different radio base station 23 which is established for recognizing the IP address pool 30, every time the connection is established.

The terminal-base station function activating manager 33 activates and deactivates the radio base station function and the radio terminal function so that they separately operate.

The IP address pool change requester 34 requests to change the IP address pool.

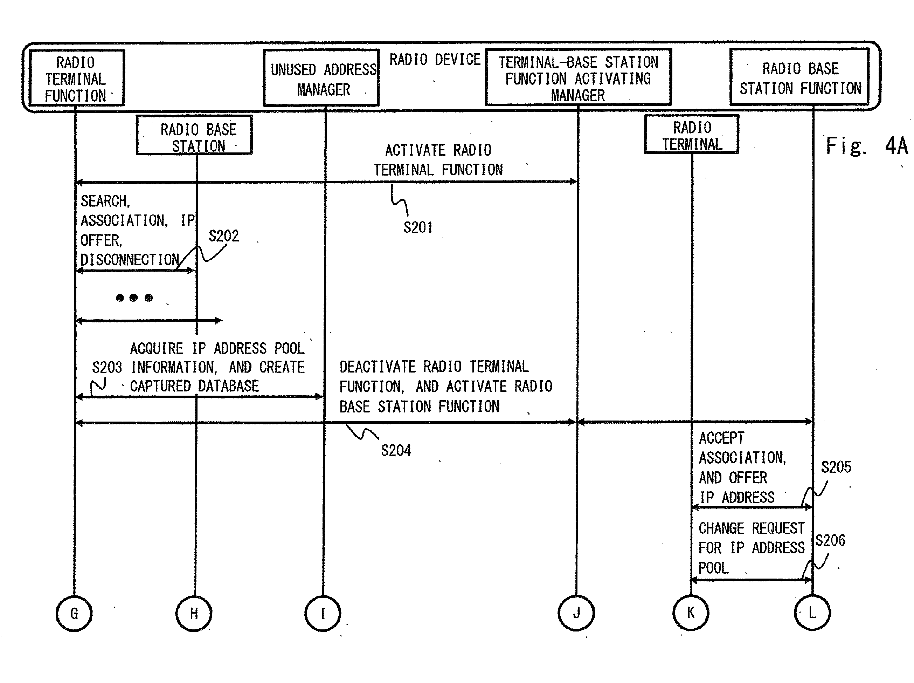

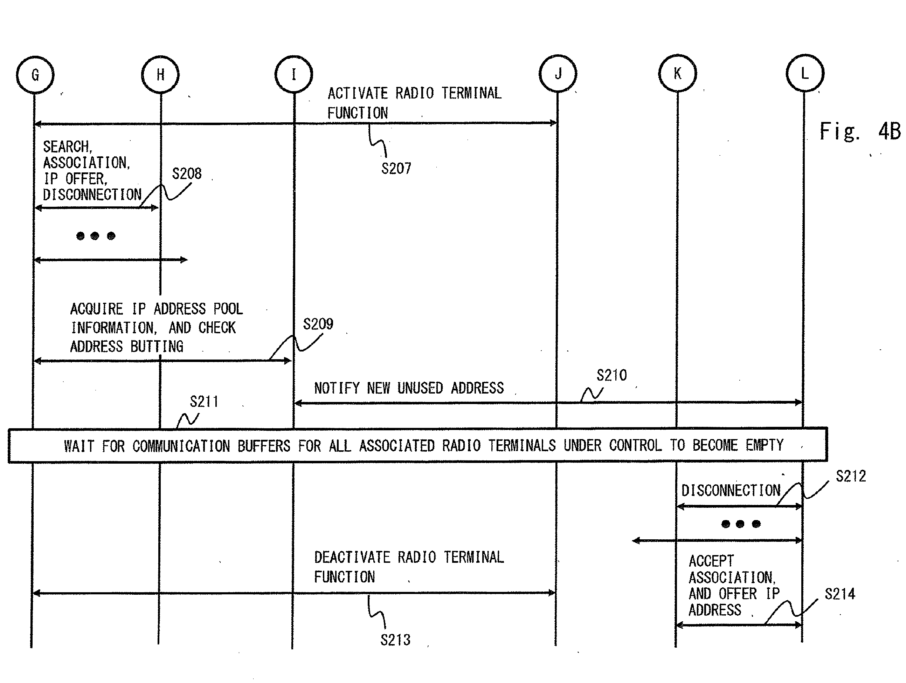

Next, a flow of processes in the communication system according to the second exemplary embodiment will be described with reference to Figs. 3, 4A and 4B. Figs. 4A and 4B are sequence diagrams showing the flow of processes in the communication system according to the second exemplary embodiment.

Assume that a user powers up the radio device 21 in order to use it as a radio base station. When the radio device 21 is booted, the terminal-base station function activating manager 23 firstly activates the radio terminal function 25 (step S201), thereby performing/making a base station search, an association request and an IP offer request for/to a different radio base station 23 which is provided in the vicinity of the radio device 21. The offer of IP address is performed for recognizing an IP address pool in a neighboring network, and therefore the offer is immediately disconnected. This process is also similarly repeated with respect to other radio base stations (step S202). As a result, the unused address manager 29 creates and holds the database 30 indicating the captured state of the IP address pool (step S203).

At this time, the terminal-base station function activating manager 23 deactivates the radio terminal function 25, and activates the radio base station function 24 (step S204). The radio base station function 24 accepts an association request originating from a different radio terminal 22, and offers an unused IP address to the radio terminal 22 (step S205).

Assume that there is caused, in the above different associated radio terminal 22, a demand for starting multi access for which a plurality of IP addresses are simultaneously used, or for changing the used IP address. In the case of the multi access, since the used IP address may also be a duplication of an IP address offered by a different AP to which the radio terminal 22 is connected, it is necessary to perform procedures for address change. Therefore, the IP address pool change requester 34 in the different radio terminal 22 issues a change request to the radio base station function 24 in the radio device 21 (step S206). The terminal-base station function activating manager 33 activates the radio terminal function 25 separate from the active radio base station function 24 (step S207), thereby performing a search for a neighboring radio base station 23, associating with the neighboring radio base station 23, receiving an offered IP address, and then canceling the association. This process is similarly repeated with respect to other radio base stations (step S208).

As a result, the unused address manager 29 updates the captured database 30 for the IP address pool, and checks whether or not the already offered IP address pool is used by other IP address pools (step S209). There is no problem if the IP addresses pool is not used. Therefore, the operation procedure is terminated at this timing. Meanwhile, if the IP address pool has already been used, the unused address manager 29 notifies the radio base station function 24 about new unused IP addresses (step S210), and the radio base station function 24 checks communication buffers for communication with all associated radio terminals under control thereof and waits for the communication buffers to become empty (step S211).

After the communication buffers become empty, the radio base station function 24 cancels the association with all radio terminals and the offer of IP addresses (step S212), and changes its configuration so as to subsequently perform DHCP offer using the unused IP addresses received at step S210. Moreover, the terminal-base station function activating manager 33 deactivates the radio terminal function 25 (step S213). After that, all radio terminals, whose association has been canceled, are re-connected to the radio base station function 24 (step S214).

Thus, in the case where the radio terminal simultaneously associates with two radio base stations, it is possible to solve the problem that two IP addresses collide and thus packets cannot be normally transmitted.

### Third Exemplary Embodiment

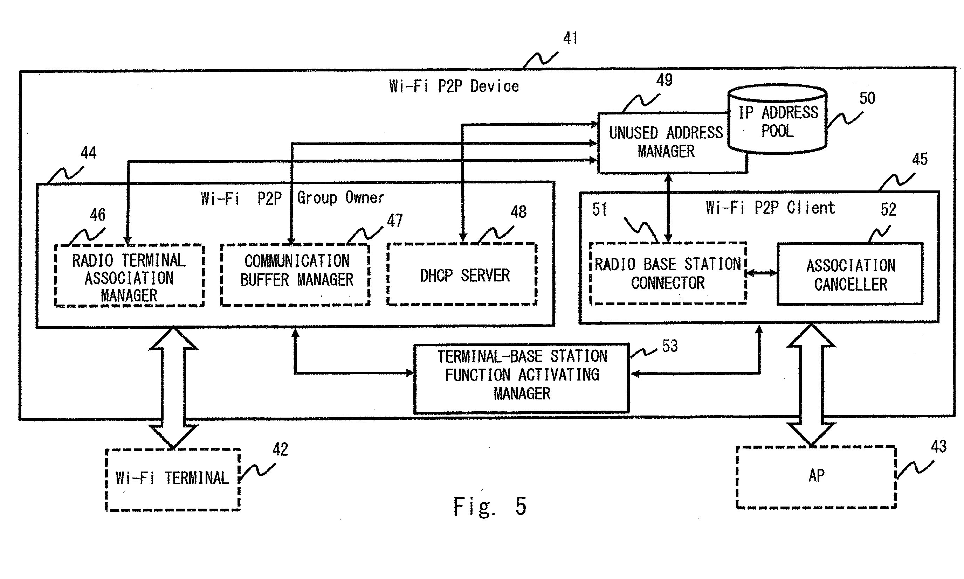

Fig. 5 shows a configuration of a communication system according to a third exemplary embodiment of the present invention. This configuration is based on the configuration of the communication system according to the first exemplary embodiment. A Wi-Fi P2P Device 41 includes a Wi-Fi P2P Group Owner 44, a Wi-Fi P2P Client 45, an unused address manager 49, and a terminal-base station function activating manager 53. The Wi-Fi P2P Group Owner 44 includes a radio terminal association manager 46, a communication buffer manager 47, and a DHCP server 48. The Wi-Fi P2P Client 45 includes a radio base station connector 51 and an association canceller 52. The unused address manager 49 includes an IP address pool 50. The Wi-Fi P2P Device 41 is connected to one or more Wi-Fi terminals 42 and one or more access points (hereinafter, APs) 43, by using a specific radio technology. The Wi-Fi P2P Device 41 is a radio device which is compatible with the Wi-Fi P2P. The Wi-Fi terminal 42 and the AP 43 may or may not be compatible with the Wi-Fi P2P.

The radio terminal association manager 46 manages association states of Wi-Fi terminals 42 under control thereof.

The communication buffer manager 47 manages empty states of communication buffers for communication with Wi-Fi terminals 42 under control thereof.

The DHCP server 48 offers IP addresses to Wi-Fi terminals 42 under control thereof.

The unused address manager 49 holds a database which indicates the captured state of the recognized IP address pool 50. Note that in the following description, the IP address pool 50 will be sometimes denoted as "data base 50" or "captured database 50".

The radio base station connector 51 performs/makes a base station search, an association request and an IP offer request for/to a different AP 43.

The association canceller 52 cancels connection to a different AP 43 which is established for recognizing the IP address pool 50, every time the connection is established.

The terminal-base station function activating manager 53 activates and deactivates the Wi-Fi P2P Group Owner 64 and the WiFi P2P Client 65 so that they separately operate.

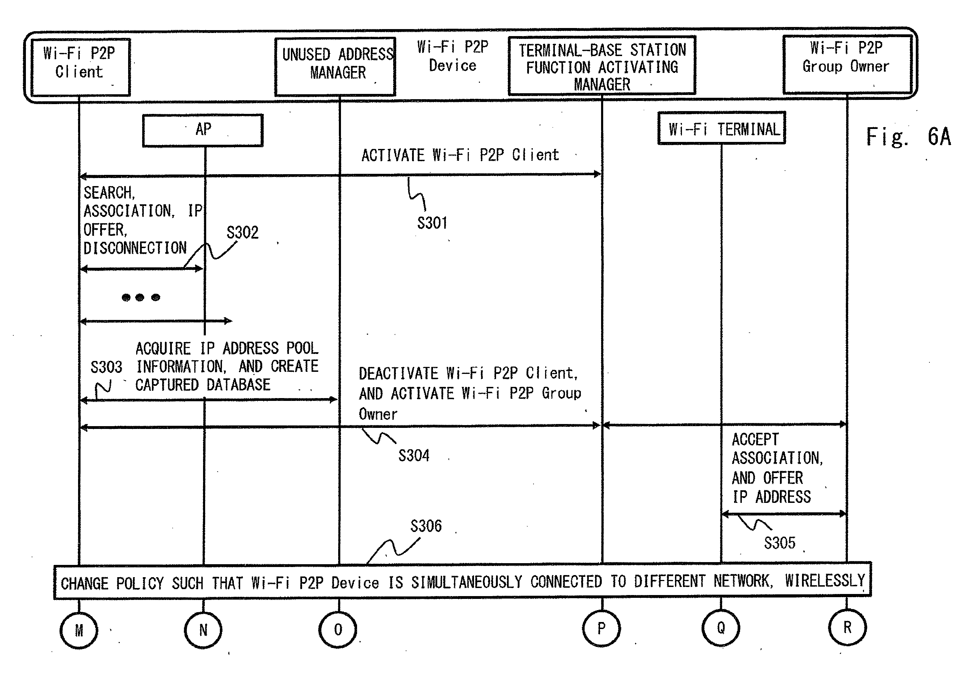

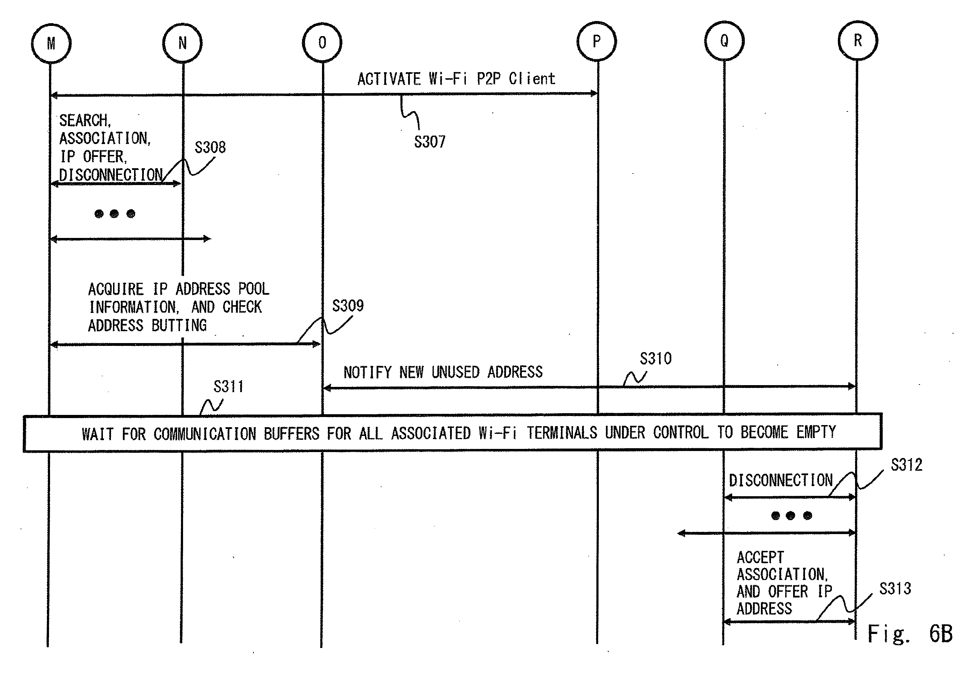

Next, a flow of processes in the communication system according to the third exemplary embodiment will be described with reference to Figs. 5, 6A and 6B. Figs. 6A and 6B are sequence diagrams showing the flow of processes in the communication system according to the third exemplary embodiment.

Assume that a user powers up the Wi-Fi P2P Device 41 in order to use it as a radio base station. When the Wi-Fi P2P Device 41 is booted, the terminal-base station function activating manager 53 firstly activates the Wi-Fi P2P Client 45 (step S301), thereby performing/making a base station search, an association request and an IP offer request for/to a different AP 43 which is provided in the vicinity of the Wi-Fi P2P Device 41. The offer of IP address is performed for recognizing an IP address pool in a neighboring network, and therefore the offer is immediately disconnected. This process is also similarly repeated with respect to other APs (step S302). As a result, the unused address manager 49 creates and holds the database 50 indicating the captured state of the IP address pool (step S303).

At this time, the terminal-base station function activating manager 53 deactivates the Wi-Fi P2P Client 45, and activates the Wi-Fi P2P Group Owner 44 (step S304). The Wi-Fi P2P Group Owner 44 accepts an association request originating from a different Wi-Fi terminal 42, and offers an unused IP address to the Wi-Fi terminal 42 (step S305).

Assume that a policy is hastily changed such that the Wi-Fi P2P Device 41 is simultaneously connected to a different network, wirelessly (step S306). The terminal-base station function activating manager 53 activates the Wi-Fi P2P Client 45 separate from the active Wi-Fi P2P Group Owner 44 (step S307), thereby performing a search for a neighboring AP 43, associating with the neighboring AP 43, receiving an offered IP address, and then canceling the association. This process is similarly repeated with respect to other APs (step S308).

As a result, the unused address manager 49 updates the captured database 50 for the IP address pool, and checks whether or not the already offered IP address pool is used by other IP address pools (step S309). There is no problem if the IP addresses pool is not used. Therefore, the operation procedure is terminated at this timing. Meanwhile, if the IP address pool has already been used, the unused address manager 59 notifies the Wi-Fi P2P Group Owner 44 about new unused IP addresses (step S310), and the Wi-Fi P2P Group Owner 44 checks communication buffers for communication with all Wi-Fi terminals under control thereof and waits for the communication buffers to become empty (step S311).

After the communication buffers become empty, the Wi-Fi P2P Group Owner 44 cancels the association with all Wi-Fi terminals and the offer of IP addresses (step S312), and changes its configuration so as to subsequently perform DHCP offer using the unused IP addresses received at step S310. After that, all Wi-Fi terminals, whose association has been canceled, are re-connected to the Wi-Fi P2P Group Owner 44 (step S313).

As described above, the radio device according to the third exemplary embodiment activates the Wi-Fi P2P Client 45 to receive the offer of IP addresses from other APs 43, thereby acquiring the IP address information which is likely to be used, and preferentially offering, by the Wi-Fi P2P Group Owner 44, the IP address other than the acquired IP address to the Wi-Fi terminal 42. Therefore, it is possible to suppress that the IP address offered by the radio device is a duplication of the IP address offered by the different AP 43. Particularly in the case where the radio base station relays packets between two IP networks, it is possible to solve the problem that IP addresses collide and thus routing cannot be normally performed. At this time, there are not caused secondary problems that information in a payload cannot be rewritten upon resolving the collision of addresses by use of NAT or NAPT, and that communication cannot be normally conducted if there is multi-stage address conversion configuration.

### Fourth Exemplary Embodiment

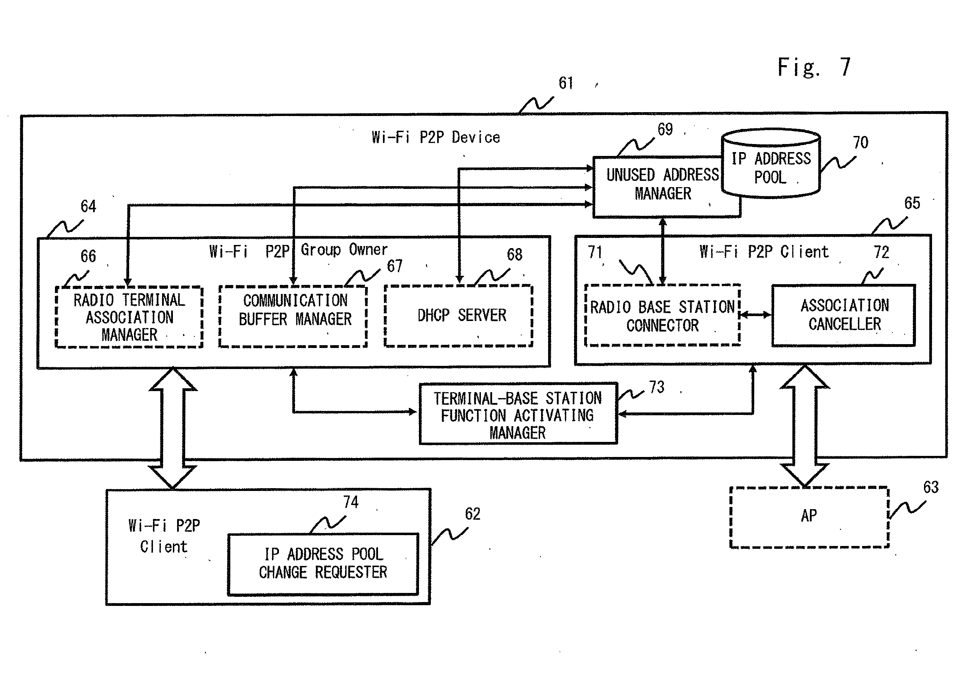

Fig. 7 shows a configuration of a communication system according to a fourth exemplary embodiment of the present invention. This configuration is based on the configuration of the communication system according to the second exemplary embodiment. A Wi-Fi P2P Device 61 includes a Wi-Fi P2P Group Owner 64, a Wi-Fi P2P Client 65, an unused address manager 69, and a terminal-base station function activating manager 73. Moreover, the Wi-Fi P2P Group Owner 64 includes a radio terminal association manager 66, a communication buffer manager 67, and a DHCP server 68. The Wi-Fi P2P Client 65 includes a radio base station connector 71 and an association canceller 72. The unused address manager 69 includes an IP address pool 70. The Wi-Fi P2P Device 61 is connected to one or more Wi-Fi P2P Clients 62 and one or more APs 63 by using a specific radio technology, and the Wi-Fi P2P Client 62 includes therein an IP address pool change requester 74. The Wi-Fi P2P Device 61 and the Wi-Fi P2P Client 62 are radio devices which are compatible with the Wi-Fi P2P. The AP 63 may or may not be compatible with the Wi-Fi P2P.

The radio terminal association manager 66 manages association states of Wi-Fi terminals 62 under control thereof.

The communication buffer manager 67 manages empty states of communication buffers for communication with Wi-Fi terminals 62 under control thereof.

The DHCP server 68 offers IP addresses to Wi-Fi terminals 62 under control thereof.

The unused address manager 69 holds a database which indicates the captured state of the recognized IP address pool 70. Note that in the following description, the IP address pool 70 will be sometimes denoted as "data base 70" or "captured database 70".

The radio base station connector 71 performs/makes a base station search, an association request and an IP offer request for/to a different AP 63.

The association canceller 72 cancels connection to a different AP 63 which is established for recognizing the IP address pool 70, every time the connection is established.

The terminal-base station function activating manager 73 activates and deactivates the Wi-Fi P2P Group Owner 64 and the WiFi P2P Client 65 so that they separately operate.

The IP address pool change requester 74 requests to change the IP address pool.

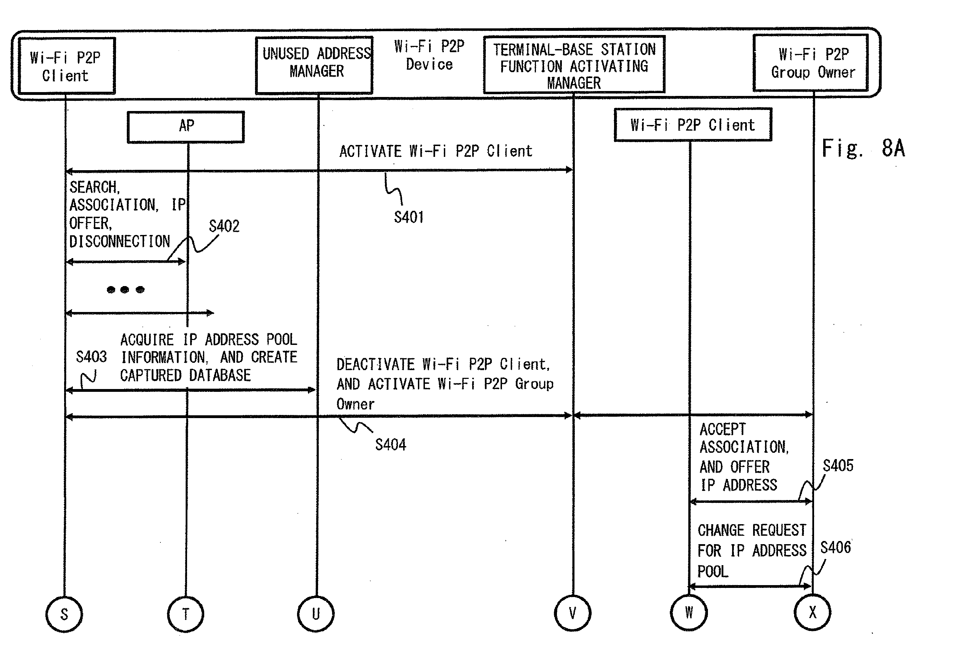

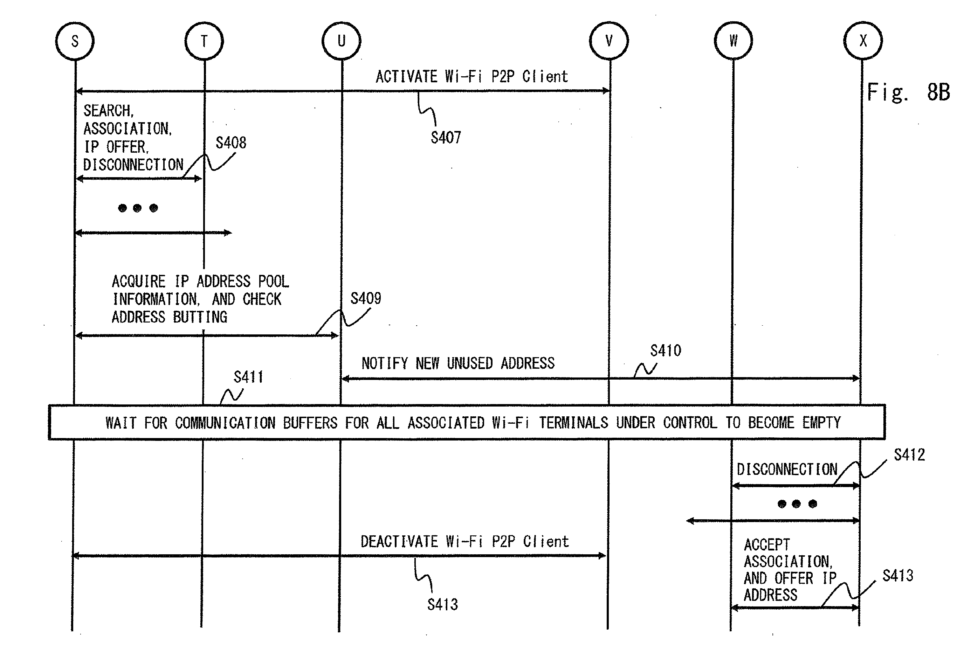

Next, a flow of processes in the communication system according to the fourth exemplary embodiment will be described with reference to Figs. 7, 8A and 8B. Figs. 8A and 8B are sequence diagrams showing the flow of processes in the communication system according to the fourth exemplary embodiment.

Assume that a user powers up the Wi-Fi P2P Device 61 in order to use it as a radio base station. When the Wi-Fi P2P Device 61 is booted, the terminal-base station function activating manager 73 firstly activates the Wi-Fi P2P Client 65 (step S401), thereby performing/making a base station search, an association request and an IP offer request for/to a different AP 63 which is provided in the vicinity of the Wi-Fi P2P Device 61. The offer of IP address is performed for recognizing an IP address pool in a neighboring network, and therefore the offer is immediately disconnected. This process is also similarly repeated with-respect to other APs (step S402). As a result, the unused address manager 69 creates and holds the database 70 indicating the captured state of the IP address pool (step S403).

At this time, the terminal-base station function activating manager 73 deactivates the Wi-Fi P2P Client 65, and activates the Wi-Fi P2P Group Owner 64 (step S404). The Wi-Fi P2P Group Owner 64 accepts an association request originating from a different Wi-Fi P2P Client 62, and offers an unused IP address to the Wi-Fi P2P Client 62 (step S405).

Assume that there is caused, in the above different associated Wi-Fi P2P Client 62, a demand for starting multi access for which a plurality of IP addresses are simultaneously used, or for changing the used IP address. In the case of the multi access, since the used IP address may also be a duplication of an IP address offered by a different AP to which the Wi-Fi P2P Client 62 is connected, it is necessary to perform procedures for address change. Therefore, the IP address pool change requester 74 in the different Wi-Fi P2P Client 62 issues a change request to the Wi-Fi P2P Group Owner 64 (step S406). The terminal-base station function activating manager 73 activates the Wi-Fi P2P Client 65 separate from the active Wi-Fi P2P Group Owner 64 (step S407), thereby performing a search for a neighboring AP 63, associating with the neighboring AP 63, receiving an offered IP address, and then canceling the association. This process is similarly repeated with respect to other APs (step S408).

As a result, the unused address manager 69 updates the captured database 70 for the IP address pool, and checks whether or not the already offered IP address pool is used by other IP address pools (step S409). There is no problem if the IP addresses pool is not used. Therefore, the operation procedure is terminated at this timing. Meanwhile, if the IP address pool has already been used, the unused address manager 69 notifies the Wi-Fi P2P Group Owner 64 about new unused IP addresses (step S410), and the Wi-Fi P2P Group Owner 64 checks communication buffers for communication with all associated Wi-Fi P2P Clients under control thereof and waits for the communication buffers to become empty (step S411).

After the communication buffers become empty, the Wi-Fi P2P Group Owner 64 cancels the association with all Wi-Fi P2P Clients and the offer of IP addresses (step S412), and changes its configuration so as to subsequently perform DHCP offer using the unused IP addresses received at step S410. Moreover, the terminal-base station function activating manager 73 deactivates the Wi-Fi P2P Client 65 (step S413). After that, all Wi-Fi P2P Clients, whose association has been canceled, are re-connected to the Wi-Fi P2P Group Owner 64 (step S414).

Thus, in the case where the radio terminal simultaneously associates with two radio base stations, it is possible to solve the problem that two IP addresses collide and thus packets cannot be normally transmitted.

Note that the present invention is not limited to the above-mentioned exemplary embodiments, and can be modified as appropriate in the range not departing from the gist thereof.

The whole or part of the exemplary embodiments disclosed above can be described as, but not limited to, the following supplementary notes.

### (Supplementary note 1)

A radio device that includes a radio base station function and a radio terminal function, the radio device comprising:
address information acquisition means for transmitting, by the radio terminal function, an address offer request to a different radio base station, and for acquiring and storing address information allocated to the radio device in response to the request; and
address information offer means for preferentially offering to a radio terminal, by the radio base station function, address information other than the address information stored in the address information acquisition means.

### (Supplementary note 2)

The radio device according to Supplementary note 1, wherein the address information acquisition means is configured to:
start a process for acquiring the address information, the process being triggered when the radio terminal function is wirelessly connected to a different radio base station.

### (Supplementary note 3)

The radio device according to Supplementary note 1, wherein the address information acquisition means is configured to:
start a process for acquiring the address information, the process being triggered when a change request for the address information is received from a radio terminal to which the radio base station function is connected.

### (Supplementary note 4)

The radio device according to any one of Supplementary notes 1 to 3, wherein the address information acquisition means is configured to:
start a process for acquiring the address information, the process being triggered when the radio device is booted.

### (Supplementary note 5)

The radio device according to any one of Supplementary notes 1 to 4, wherein the address information acquisition means is configured to:
transmit an address offer request to a different radio base station;
acquire address information allocated to the radio device in response to the request to associate with the radio base station; and
then cancel the association.

### (Supplementary note 6)

The radio device according to any one of Supplementary notes 1 to 5, wherein the address information offer means is configured to:
disconnect, upon offering address information to a radio terminal with which the radio base station function communicates, communication with the radio terminal after a communication buffer for the communication with the radio terminal becomes empty; and
perform the offer of the address information.

### (Supplementary note 7)

An address determination method for a radio terminal, comprising the steps of:
transmitting an address offer request to a different radio base station;
receiving allocated address information from the different radio base station; and
preferentially offering, upon offering an address to a radio terminal, address information other than the received address information to the radio terminal.

### (Supplementary note 8)

The address determination method according to Supplementary note 7, wherein the address offer request is transmitted by using, as a trigger, wireless connection to a different radio base station.

### (Supplementary note 9)

The address determination method according to Supplementary note 7, wherein the address offer request is transmitted by using, as a trigger, reception of a change request for the address information from a connected radio terminal.

### (Supplementary note 10)

The address determination method according to any one of Supplementary notes 7 to 9, wherein the address offer request is transmitted by using a boot as a trigger.

### (Supplementary note 11)

The address determination method according to any one of Supplementary notes 7 to 10, including the step of cancelling association with the radio base station after the step of receiving the allocated address information.

### (Supplementary note 12)

The address determination method according to any one of Supplementary notes 7 to 11, wherein upon offering address information to a radio terminal in communication, communication with the radio terminal is disconnected after a communication buffer for the communication with the radio terminal becomes empty, and then the offer of the address information is performed.

### (Supplementary note 13)

A communication system comprising:
a radio device that includes a radio base station function and a radio terminal function; and
a radio terminal that can communicate with the radio device,
wherein the radio terminal includes means for outputting a change request for address information upon performing multi access to a radio base station other than the radio device,
wherein the radio device comprises:
   address information acquisition means for transmitting an address offer request to a different radio base station, the address offer request being triggered when a change request for address information is received from a radio terminal to which the radio base station function is connected, and for acquiring and storing address information allocated to the radio device in response to the address offer request; and
   address information offer means for preferentially offering to a radio terminal, by the radio base station function, address information other than the address information stored in the address information acquisition means.

### (Supplementary note 14)

A radio terminal that outputs, to a first radio base station, a change request for address information offered by the first radio base station, when the radio terminal performs multi access to a second radio base station that differs from the first radio base station, while communicating with the first radio base station.

This application is based upon and claims the benefit of priority from Japanese patent application No. 2012-082671, filed on March 30, 2012, the disclosure of which is incorporated herein in its entirety by reference.

### Reference Signs List

- 1, 21: RADIO DEVICE
- 2, 22: RADIO TERMINAL
- 3, 23: RADIO BASE STATION
- 4, 24: RADIO BASE STATION FUNCTION
- 5, 25: RADIO TERMINAL FUNCTION
- 6, 26: RADIO TERMINAL ASSOCIATION MANAGER
- 7, 27: COMMUNICATION BUFFER MANAGER
- 8, 28: DHCP SERVER
- 9, 29: UNUSED ADDRESS MANAGER
- 10, 30: IP ADDRESS POOL
- 11, 31: RADIO BASE STATION CONNECTOR
- 12, 32: ASSOCIATION CANCELLER
- 13, 33: TERMINAL-BASE STATION FUNCTION ACTIVATING MANAGER
- 34: IP ADDRESS POLL CHANGE REQUESTER
- 41, 61: Wi-Fi P2P Device
- 42, 62: Wi-Fi TERMINAL
- 43, 63: ACCESS POINT
- 44, 64: Group Owner
- 45, 65: Wi-Fi P2P Client
- 46, 66: RADIO TERMINAL ASSOCIATION MANAGER
- 47, 67: COMMUNICATION BUFFER MANAGER
- 48, 68: DHCP SERVER
- 49, 69: UNUSED ADDRESS MANAGER
- 50, 70: IP ADDRESS POOL
- 51, 71: RADIO BASE STATION CONNECTOR
- 52, 72: ASSOCIATION CANCELLER
- 53, 73: TERMINAL-BASE STATION FUNCTION ACTIVATING MANAGER
- 74: IP ADDRESS POLL CHANGE REQUESTER

## Claims

1. A radio device comprising:
address information acquisition means for transmitting, by a radio terminal function, an address offer request to a different radio base station, and for acquiring and storing address information allocated to the radio device in response to the request; and
address information offer means for preferentially offering to a radio terminal, by a radio base station function, address information other than the address information stored in the address information acquisition means.

2. The radio device according to Claim 1, wherein the address information acquisition means is configured to:
start a process for acquiring the address information, the process being triggered when the radio terminal function is wirelessly connected to a different radio base station.

3. The radio device according to Claim 1, wherein the address information acquisition means is configured to:
start a process for acquiring the address information, the process being triggered when a change request for the address information is received from a radio terminal to which the radio base station function is connected.

4. The radio device according to any one of Claims 1 to 3,
wherein the address information acquisition means is configured to:
start a process for acquiring the address information, the process being triggered when the radio device is booted.

5. The radio device according to any one of Claims 1 to 4,
wherein the address information acquisition means is configured to:
transmit an address offer request to a different radio base station;
acquire address information allocated to the radio device in response to the request to associate with the radio base station; and
then cancel the association.

6. The radio device according to any one of Claims 1 to 5,
wherein the address information offer means is configured to:
disconnect, upon offering address information to a radio terminal with which the radio base station function communicates, communication with the radio terminal after a communication buffer for the communication with the radio terminal becomes empty; and
perform the offer of the address information.

7. An address determination method for a radio terminal, comprising the steps of:
transmitting an address offer request to a different radio base station;
receiving allocated address information from the different radio base station; and
preferentially offering, upon offering an address to a radio terminal, address information other than the received address information to the radio terminal.

8. The address determination method according to Claim 7,
wherein the address offer request is transmitted by using, as a trigger, wireless connection to a different radio base station.

9. A communication system,
wherein a radio terminal includes means for outputting a change request for address information upon performing multi access to a radio base station other than a radio device,
wherein the radio device comprises:
address information acquisition means for transmitting an address offer request to a different radio base station, the address offer request being triggered when a change request for address information is received from a radio terminal to which a radio base station function is connected, and for acquiring and storing address information allocated to the radio device in response to the address offer request; and
address information offer means for preferentially offering to a radio terminal, by the radio base station function, address information other than the address information stored in the address information acquisition means.

10. A radio terminal that outputs, to a first radio base station, a change request for address information offered by the first radio base station, when the radio terminal performs multi access to a second radio base station that differs from the first radio base station, while communicating with the first radio base station.
